# EUROPEAN PATENT SPECIFICATION

(11) **EP 2 586 821 B1**
(45) Date of publication and mention of the grant of the patent: **02.12.2015**
(21) Application number: 10853454.6
(22) Date of filing: 29.06.2010
(51) Int. Cl.: C08L 3/02, C08K 3/26, C08L 23/06, C08L 23/12

(54) **DEGRADABLE STARCH-BASED PLASTIC MASTERBATCH AND PREPARATION METHOD THEREOF**
ABBAUBARE KUNSTSTOFFGRUNDMISCHUNG AUF STÄRKEBASIS UND HERSTELLUNGSVERFAHREN DAFÜR
LOT-MAÎTRE DE PLASTIQUE DÉGRADABLE À BASE D'AMIDON ET SON PROCÉDÉ DE PRÉPARATION

(30) Priority: 23.06.2010 CN 201010207060
(43) Date of publication of application: 01.05.2013
(73) Proprietor: Sun, Yansheng, Chengde, Hebei 067400 (CN)
(72) Inventor: Sun, Yansheng, Chengde, Hebei 067400 (CN)
(74) Representative: Hanna, Peter William Derek
(86) International application number: PCT/CN2010/074671
(87) International publication number: WO 2011/160312

(56) References cited:
- CN-A- 1 354 197
- CN-A- 101 270 206
- CN-A- 101 429 294
- DATABASE WPI Week 200915 Thomson Scientific, London, GB; AN 2009-B37149 XP002696162, -& CN 101 293 975 A (ZHEJIANG GLOBAL TEXTILE CO LTD) 29 October 2008 (2008-10-29)

## Description

### FIELD OF THE INVENTION

The present invention relates to biodegradation, particularly to a starch-based degradable plastic masterbatch and its preparation method.

### BACKGROUND OF THE INVENTION

Plastics have been greatly developed in a wide variety of fields due to their light weight, high strength, chemical stability, low cost and so on. Although the plastic industry develops rapidly, a satisfactory way to deal with waste plastics has not been well established, and thereby a large quantity of plastic garbage has seriously polluted the natural environment. Discarded plastic garbage pollutes the environment, while deeply buried plastic garbage occupies land, and burning plastics pollute the air. Thus developing degradable plastics to replace those nondegradable plastics is a feasible solution to solve the problem.

Environmentally degradable plastics belong to a new plastic type. Its development abroad began in 1970s and mainly focused on photodegradable plastics at that time to relieve the environmental pollution caused by the discarded plastics, especially the disposable plastic packaging products. In 1980s, the development and research turned to biodegradable plastics. Meanwhile, instead of petroleum, renewable resources such as plant starch and cellulose, animal chitin and the like, began to be used as raw materials to produce the biodegradable plastics. The development and research in degradable plastics of China substantially kept pace with the world's, and was firstly aimed at the agricultural mulch film. Since China is a large agricultural country, mulch film consumption in China ranks the first in the world. In order to settle the problem of residual mulch film left in farmlands, which may affect the growth of plant roots and block ploughing by tractors, biodegradable plastics made from starch-filled general plastics were developed in around 1990. At the same time, based on photodegradable plastics, starch-filled mulch films with both photo- and biodegradation functions were developed. In recent years, the consumption amount of disposable plastic packaging products is increasing with the improved living standard, which results in more and more serious environmental pollution. Therefore, it is urgent to develop time-controllable and environmentally degradable plastics according to different uses and environmental conditions.

CN 101293975 A and CN101429294 A are representative of the present state of the art.

### SUMMARY OF THE INVENTION

The present invention provides a starch-based biodegradable plastics masterbatch, in accordance with claims which follow, which is prepared from starch, light calcium carbonate, rock powder, plastic material, compatibilizer, lubricant, modifier and degradation accelerant as raw materials. The starch-based biodegradable plastics masterbatch of the invention is easily controllable and degradable, has desired strength and flexibility to meet product requirements and can be produced with lower processing cost.

Another objective of the present invention is to provide a method for preparing the starch-based biodegradable plastics masterbatch.

The objectives of the present invention are realized by the following technical solutions. A starch-based degradable plastic masterbatch, which is prepared from raw materials with parts in weight as follows:

| | |
|---|---|
| starch | 40-70, |
| light calcium carbonate | 10-20, |
| rock powder | 2-10, |
| plastic material | 13-25, |
| compatibilizer | 1-5, |
| lubricant | 1-5, |
| modifier | 1-5, and |
| degradation accelerant | 1-5; |

wherein the plastic material is polypropylene, polypropylene resin or linear polyethylene, the modifier is itaconic acid, the degradation accelerant is epoxidized soybean oil, and the lubricant is polyethylene wax.

According to a reference example (not claimed), the starch-based degradable plastic masterbatch is prepared from the raw materials with parts in weight as follows:

| | |
|---|---|
| the starch | 65, |
| the light calcium carbonate | 7, |
| the rock powder | 3, |
| the plastic material | 15, |
| the compatibilizer | 2, |
| the lubricant | 2, |
| the modifier | 3, and |
| the degradation accelerant | 3. |

According to an embodiment of the invention, the starch-based degradable plastic masterbatch is prepared from raw materials with parts in weight as follows:

| | |
|---|---|
| the starch | 40, |
| the light calcium carbonate | 20, |
| the rock powder | 3, |
| the plastic material | 25, |
| the compatibilizer | 2, |
| the lubricant | 2, |
| the modifier | 3, and |
| the degradation accelerant | 5. |

The starch preferably is maize starch or tapioca starch.

The rock powder preferably is talc or jade powder.

The compatibilizer preferably is one selected from vegetable oil, mineral oil and aluminate coupling agent, or a mixture thereof.

The lubricant is polyethylene wax.

The modifier is itaconic acid.

The degradation accelerant is epoxidized soybean oil.

A method for preparing the starch-based degradable plastic masterbatch comprises steps of:
A. weighing each of the raw materials according to their parts in weight;
B. mixing the starch, light calcium carbonate and rock powder in a mixer for 20-30 minutes at 165-180°C;
C. adding modifier into the mixer and mixing for 2-6 minutes at 140-155°C;
D. adding compatibilizer into the mixer and mixing for 4-6 minutes at 140-160 °C;
E. adding a plastic material, degradation accelerant and lubricant into the mixer and mixing for 10-12 minutes at 160-175°C, and then cooling the obtained mixture in a material holding container to obtain a mixed base material; and
F. granulating the mixed base material in a granulator to obtain the starch-based degradable plastic masterbatch, wherein the temperature of the granulator is 120-170°C.

The present invention has the following advantages compared with the prior art:
1. The starch-based degradable plastic masterbatch of the present invention, in which the starch is used as the biologically active substance and the light, oxygen and thermal degradation accelerants are added, has multiple degradation characteristics under the action of light, oxygen, heat and microorganism. The masterbatch and the products made from the masterbatch are degraded through the processes of losing their original use properties after an (controllable) induction period, with a sharp decrease of their mechanical properties. Then they're degraded into fragments and powder and ultimately assimilated by the environment. Due to the significantly reduced molecular weight of synthetic polymer compared with the prior art, the masterbatch of the invention can be further degraded in an aerobic environment and turned into carbon dioxide and water at last, resulting in no secondary pollution while entering the air and soil. The degradation period (induction period) can be controlled by adjusting the amount of the composite modifiers and biologically active substance according to requirements.
2. An agricultural mulch film blown by using the starch-based degradable plastic masterbatch of the present invention, in which the masterbatch is well dispersed, has a smooth and bright surface, a light transmittance of 70% or more and a degradation period controlled within 2-8 months.
3. A plastic film prepared by using the starch-based degradable plastic masterbatch of the present invention has higher flexibility and required strength. The plastic film particularly has a transverse/longitudinal tensile force of at least 1.2N and an elongation rate of at least 115%.
4. With the addition of light calcium carbonate and rock powder, the amount of synthetic polymer (polypropylene, polypropylene resin or linear polyethylene) in the starch-based degradable plastic masterbatch of the present invention is greatly reduced. In addition, with the reasonable preparation processes, not only the qualities of the final products are improved, but also the cost is reduced by 45% while ensuring a good degradation effect.

### DETAILED DESCRIPTION OF THE INVENTION

The present invention is further described with combination of the Embodiments.

The starch-based degradable plastic masterbatch is prepared from the raw materials with parts in weight as follows:

| | |
|---|---|
| the starch | 40-70, |
| the light calcium carbonate | 10-20, |
| the rock powder | 2-10, |
| the plastic material | 13-25, |
| the compatibilizer | 1-5, |
| the lubricant | 1-5, |
| the modifier | 1-5, and |
| the degradation accelerant | 1-5; |

wherein the plastic material is polypropylene, polypropylene resin or linear polyethylene, the modifier is itaconic acid, the degradation accelerant is epoxidized soybean oil, and the lubricant is polyethylene wax.

All kinds of the raw materials described above can be purchased from manufacturers and chemical stores, and their product specifications and qualities are consistent with national or industrial standards.

In the raw materials of the present invention described above, the starch may be maize starch or tapioca starch; and the rock powder may be talc or jade powder. Jade powder is usually used in the plastic masterbatch for high-grade end products. The compatibilizer may be one selected from vegetable oil (such as castor oil), mineral oil (such as white mineral oil) and aluminate coupling agent, or a mixture thereof. When the finished product is used for packaging or may touch food, the vegetable oil is preferred. The lubricant is polyethylene wax. The modifier is itaconic acid, which has the chemical name of methylene succinic acid (molecular formula: C₅H₆O₄). The degradation accelerator is epoxidized soybean oil.

Furthermore, the starch-based degradable plastic masterbatch is prepared from raw materials with parts in weight as follows:

| | |
|---|---|
| the starch | 65, |
| the light calcium carbonate | 7, |
| the rock powder | 3, |
| the plastic material | 15, |
| the compatibilizer | 2, |
| the lubricant | 2, |
| the modifier | 3, and |
| the degradation accelerant | 3. |

### Reference Example 1 (not claimed)

The starch-based degradable plastic masterbatch of the reference example is prepared from the raw materials with parts in weight as follows:

| | |
|---|---|
| maize starch | 65, |
| light calcium carbonate | 7, |
| talc powder | 3, |
| polypropylene resin | 15, |
| aluminate coupling agent | 2, |
| polyethylene wax | 2, |
| itaconic acid | 3, and |
| epoxidized soybean oil | 3. |

In the reference example, light calcium carbonate can increase the flexibility of final product. Regarding plastic mulch film or plastic bag, it can make the product fluffy and exhibit higher light transmittance, ductility and softness.

Talc powder can increase the strength of final product, that is, the finished product has a sufficient load bearing capacity while keeping light and thin, with a high light transmittance and flexibility.

The starch-based degradable plastic masterbatch, taking 100 kg as an example, was prepared with the following steps.
A. Each component was weighed according to the above listed parts of the raw materials, in which the moisture content in each of the maize starch, light calcium carbonate and talc powder is less than 6%.
B. 65 kg of maize starch, 7 kg of light calcium carbonate and 3 kg of talc powder were added in a mixer, then were mixed for 20-30 minutes at 165-180°C.
   The mixer used in the Embodiment is Heating/Cooling mixer SRL-230/500A (specification: hot mixing 300L / cold mixing 500 L).
C. 3 kg of itaconic acid as the modifier was added in the mixer and mixed for 4 minutes at 148°C.
D. 2 kg of aluminate coupling agent as the compatibilizer was added in the mixer and mixed for 5 minutes at 150°C.
E. 15 kg of polypropylene resin, 3 kg of epoxidized soybean oil as the degradation accelerant and 2 kg of polyethylene wax as the lubricant were added in the mixer, and were mixed for 12 minutes at 167°C. Then the mixture was placed in a material holding container for cooling to obtain a mixed base material.
F. The obtained mixed base material was granulized with a granulator to obtain the cylindrical starch-based degradable plastic masterbatch with diameter of 2 mm and length of about 3-4 mm.

The granulator used in step F of the Embodiment was the parallel twin-screw granulator TE-65 (specification: screw length-diameter ratio is 44:1, and rotating speed is 30-500 rpm); the temperature of each section of the twin-screw of the parallel twin-screw granulator was 120-170 °C.

The parameters of the starch-based degradable plastic masterbatch obtained by the above preparation method of the present invention are as follows:
(1) moisture content: < 1%;
(2) melting index :1-3 g / 10min;
(3) specific gravity: 1-1.2 g/cm³.

The starch-based degradable plastic masterbatch of the Embodiment can be used for blowing agricultural mulch films, packaging films, food bags, preservative bags, garbage bags or the like with conventional methods. For blowing agricultural mulch film or packaging film, 30 wt% of the starch-based degradable plastic masterbatch of the present invention was added in synthetic polymer plastics , with the amount of the masterbatch subject to needs, and the film was blown with a conventional film-blowing equipment at a temperature of 160°C-200°C. The obtained agricultural mulch film or packaging film has a smooth and bright surface and light transmittance ≥ 70%, and additives in the film are well dispersed. The degradation period of the prepared agricultural mulch film or packaging film could be controlled within about 3 months; the degradation started after 3 months and no residue was left upon completion of degradation, according to a test.

The parameters of the blown agricultural mulch film are as follows:
moisture content ≤ 1%, density 1.1-1.2 g/cm ³, and melting index (melt flowing index) 1.5-8 g/10 min.

The parameters of the blown packaging film are as follows:
moisture content ≤ 1%, density 1.1-1.2 g/cm ³, and melting index (melt flowing index) 1.5-8g/10 min.

### Embodiment 2

The starch-based degradable plastic masterbatch of the Embodiment is prepared from the raw materials with parts in weight as follows:

| | |
|---|---|
| maize starch | 40, |
| light calcium carbonate | 20, |
| talc powder | 3, |
| polypropylene resin | 25, |
| aluminate coupling agent | 2, |
| polyethylene wax | 2, |
| itaconic acid | 3, and |
| epoxidized soybean oil | 5. |

The starch-based degradable plastic masterbatch, taking 100 kg as an example, was prepared with the following steps.
A. Each component was weighed according to the above listed parts of the raw materials, in which the moisture content in each of the maize starch, light calcium carbonate and talc powder is less than 6%.
B. 40 kg of maize starch, 20 kg of light calcium carbonate and 3 kg of talc powder were added in a mixer, then were mixed for 20-30 minutes at 165-180°C.
C. 3 kg of itaconic acid as the modifier was added in the mixer and mixed for 5 minutes at 150°C.
D. 2 kg of aluminate coupling agent as the compatibilizer was added in the mixer and mixed for 5 minutes at 150°C.
E. 25 kg of polypropylene resin, 5 kg of epoxidized soybean oil as the degradation accelerant and 2kg of polyethylene wax as the lubricant were added in the mixer, and were mixed for 10 minutes at 170°C. Then the mixture was placed in a material holding container for cooling to obtain a mixed base material.
F. The obtained mixed base material was granulized with a granulator to obtain the cylindrical starch-based degradable plastic masterbatch with diameter of 2 mm and length of 3-4 mm.

The starch-based degradable plastic masterbatch of the Embodiment can be used for blowing agricultural mulch films, packaging films, food bags, preservative bags, garbage bags or the like with conventional methods. For blowing agricultural mulch film or packaging film, 20 wt% of the starch-based degradable plastic masterbatch of the present invention was added in synthetic polymer plastics , with the amount of the materbatch subject to needs, and the film was blown with a conventional film-blowing equipment at a temperature of 150°C-200°C. The obtained agricultural mulch film or packaging film has a smooth and bright surface and light transmittance ≥ 70%, and additives in the film are well dispersed. The degradation period of the prepared agricultural mulch film or packaging film could be controlled within about 8 months; the degradation started after 8 months and no residue was left upon completion of degradation, according to a test.

### Embodiment 3

The starch-based degradable plastic masterbatch of the Embodiment is prepared from the raw materials with parts in weight as follows:

| | |
|---|---|
| maize starch | 70, |
| light calcium carbonate | 10, |
| talc powder | 2, |
| polypropylene resin | 13, |
| aluminate coupling agent | 1, |
| polyethylene wax | 1, |
| itaconic acid | 1, and |
| epoxidized soybean oil | 2. |

The starch-based degradable plastic masterbatch, taking 100 kg as an example, was prepared with the following steps.
A. Each component was weighed according to the above listed parts of the raw materials, in which the moisture content in each of the maize starch, light calcium carbonate and talc powder is less than 6%.
B. 70 kg of maize starch, 10 kg of light calcium carbonate and 2 kg of talc powder were added in a mixer, then were mixed for 20-30 minutes at 165-180°C.
C. 1 kg of itaconic acid as the modifier was added in the mixer and mixed for 3 minutes at 155°C.
D. 1 kg of aluminate coupling agent as the compatibilizer was added in the mixer and mixed for 3 minutes at 155 °C.
E. 13 kg of polypropylene resin, 2 kg of epoxidized soybean oil as the degradation accelerant and 1 kg of polyethylene wax as the lubricant were added in the mixer, and were mixed for 10 minutes at 175°C. Then the mixture was placed in a material holding container for cooling to obtain a mixed base material.
F. The obtained mixed base material was granulized with a granulator to obtain the cylindrical starch-based degradable plastic masterbatch with diameter of 2 mm and length of 3-4 mm.

The starch-based degradable plastic masterbatch of the Embodiment can be used for blowing agricultural mulch films, packaging films, food bags, preservative bags, garbage bags or the like with conventional methods. For blowing agricultural mulch film or packaging film, 40 wt% of the starch-based degradable plastic masterbatch of the present invention was added in synthetic polymer plastics, with the amount of the masterbatch subject to needs, and the film was blown with a conventional film-blowing equipment at a temperature of 170°C-200°C. The obtained agricultural mulch film or packaging film has a smooth and bright surface and light transmittance ≥ 70%, and additives in the film are well dispersed. The degradation period of the prepared agricultural mulch film or packaging film could be controlled within about 4 months; the degradation started after 4 months and no residue was left upon completion of degradation, according to a test. A starch-based degradable plastic masterbatch of the present invention can be used for preparing containers having a fixed shape (such as packaging bottles) by conventional methods. 100 wt% of the starch-based degradable plastic masterbatch may be used for preparing the containers. According to the requirements of a finished product, the degradation period of the containers can be controlled within about 6-18 months. The degradation starts after 6-18 months and no residue is left upon completion of degradation.

## Claims

1. A starch-based biodegradable plastics masterbatch, **characterized in that**, the starch-based biodegradable plastics masterbatch is prepared from raw materials with parts by weight as follows:
| | |
|---|---|
| starch | 40-70, |
| light calcium carbonate | 10-20, |
| rock powder | 2-10, |
| plastics material | 13-25, |
| compatibilizer | 1-5, |
| lubricant | 1-5, |
| modifier | 1-5, and |
| degradation accelerant | 1-5; |
wherein the plastics material is polypropylene, polypropylene resin or linear polyethylene, the modifier is itaconic acid, the degradation accelerant is epoxidized soybean oil, and the lubricant is polyethylene wax.

2. The starch-based biodegradable plastics masterbatch according to claim 1, wherein the starch-based biodegradable plastics masterbatch is prepared from raw materials with parts by weight as follows:
| | |
|---|---|
| the starch | 40, |
| the light calcium carbonate | 20, |
| the rock powder | 3, |
| the plastics material | 25, |
| the compatibilizer | 2, |
| the lubricant | 2, |
| the modifier | 3, and |
| the degradation accelerant | 5. |

3. The starch-based biodegradable plastics masterbatch according to claim 1 or 2, wherein the starch is maize starch or tapioca starch.

4. The starch-based biodegradable plastics masterbatch according to claim 1 or 2, wherein the rock powder is talc powder or jade powder.

5. The starch-based biodegradable plastics masterbatch according to claim 1 or 2, wherein the compatibilizer is one selected from vegetable oil, mineral oil and aluminate coupling agent, or a mixture thereof.

6. A method for preparing a starch-based biodegradable plastics masterbatch according to claim 1 which comprises steps of:
A. weighing each of the raw materials according to their parts in weight;
B. mixing the starch, light calcium carbonate and rock powder in a mixer for 20-30 minutes at 165-180°C;
C. adding modifier into the mixer and mixing for 2-6 minutes at 140-155°C;
D. adding compatibilizer into the mixer and mixing for 4-6 minutes at 140-160 °C;
E. adding a plastic material, degradation accelerant and lubricant into the mixer and mixing for 10-12 minutes at 160-175°C, and then cooling the obtained mixture in a material holding container to obtain a mixed base material; and
F. granulating the mixed base material in a granulator to obtain the starch-based degradable plastics masterbatch, wherein the temperature of the granulator is 120-170°C.

## Patentansprüche

1. Abbaubare Kunststoffgrundmischung auf Stärkebasis, **dadurch gekennzeichnet, dass** die abbaubare Kunststoffgrundmischung auf Stärkebasis aus Rohstoffen mit den folgenden Gewichtsanteilen hergestellt wird:
| | |
|---|---|
| Stärke | 40-70, |
| Leichtes Calciumcarbonat | 10-20, |
| Steinpulver | 2-10, |
| Kunststoffmaterial | 13-25, |
| Verträglichkeitsvermittler | 1-5, |
| Schmiermittel | 1-5, |
| Modifizierer | 1-5, und |
| Abbaubeschleuniger | 1-5; |
wobei es sich bei dem Kunststoffmaterial um Polypropylen, Polypropylenharz oder lineares Polyethylen, bei dem Modifizierer um Itakonsäure, bei dem Abbaubeschleuniger um epoxidiertes Sojabohnenöl und bei dem Schmiermittel um Polyethylenwachs handelt.

2. Abbaubare Kunststoffgrundmischung auf Stärkebasis gemäß Anspruch 1, wobei die abbaubare Kunststoffgrundmischung auf Stärkebasis aus Rohstoffen mit den folgenden Gewichtsanteilen hergestellt wird:
| | |
|---|---|
| die Stärke | 40, |
| das leichte Calciumcarbonat | 20, |
| das Steinpulver | 3, |
| das Kunststoffmaterial | 25, |
| der Verträglichkeitsvermittler | 2, |
| das Schmiermittel | 2, |
| der Modifizierer | 3, und |
| der Abbaubeschleuniger | 5. |

3. Abbaubare Kunststoffgrundmischung auf Stärkebasis gemäß Anspruch 1 oder 2, wobei es sich bei der Stärke um Maisstärke oder Tapiokastärke handelt.

4. Abbaubare Kunststoffgrundmischung auf Stärkebasis gemäß Anspruch 1 oder 2, wobei es sich bei dem Steinpulver um Talkpulver oder Jadepulver handelt.

5. Abbaubare Kunststoffgrundmischung auf Stärkebasis gemäß Anspruch 1 oder 2, wobei es sich bei dem Verträglichkeitsvermittler um Pflanzenöl, Mineralöl, Aluminat-Kupplungsmittel oder eine Mischung davon handelt.

6. Verfahren zur Herstellung einer abbaubaren Kunststoffgrundmischung auf Stärkebasis gemäß Anspruch 1, welches die folgenden Schritte umfasst:
A. Wiegen jedes der Rohstoffe gemäß ihrem Gewichtsanteil;
B. Mischen der Stärke, des leichten Calciumcarbonats und des Steinpulvers in einem Mischer für 20-30 Minuten bei 165-180 °C;
C. Hinzufügen des Modifizierers in den Mischer und Mischen für 2-6 Minuten bei 140-155 °C;
D. Hinzufügen des Verträglichkeitsvermittlers in den Mischer und Mischen für 4-6 Minuten bei 140-160 °C;
E. Hinzufügen des Kunststoffmaterials, des Abbaubeschleunigers und des Schmiermittels in den Mischer und Mischen für 10-12 Minuten bei 160-175 °C, und dann Abkühlen der erhaltenen Mischung in einem Materialhaltebehälter, um ein gemischtes Grundmaterial zu erhalten; und
F. Granulieren des gemischten Grundmaterials in einer Granuliervorrichtung, um die abbaubare Kunststoffgrundmischung auf Stärkebasis zu erhalten, wobei die Temperatur der Granuliervorrichtung bei 120-170 °C liegt.

## Revendications

1. Mélange maître de matière plastique biodégradable à base d'amidon, **caractérisé en ce que** le mélange maître de matière plastique biodégradable à base d'amidon est préparé à partir de matières premières dont les parties en poids sont les suivantes :
| | |
|---|---|
| amidon : | 40 - 70 ; |
| carbonate de calcium léger : | 10 - 20 ; |
| poudre de roche : | 2 - 10 ; |
| matériau de matière plastique : | 13 - 25 ; |
| agent de compatibilisation : | 1 - 5 ; |
| lubrifiant : | 1 - 5 ; |
| agent de modification : | 1 - 5 ; et |
| agent d'accélération de la dégradation : | 1 - 5 ; |
dans lequel le matériau de matière plastique est un polypropylène, une résine de polypropylène ou un polyéthylène linéaire, l'agent de modification est un acide itaconique, l'agent d'accélération de la dégradation est une huile de soja époxyde, et le lubrifiant est une cire de polyéthylène.

2. Mélange maître de matière plastique biodégradable à base d'amidon selon la revendication 1, dans lequel le mélange maître de matière plastique biodégradable à base d'amidon est préparé à partir de matières premières dont les parties en poids sont les suivantes :
| | |
|---|---|
| amidon : | 40 ; |
| carbonate de calcium léger : | 20 ; |
| poudre de roche : | 3 ; |
| matériau de matière plastique : | 25 ; |
| agent de compatibilisation : | 2 ; |
| lubrifiant : | 2 ; |
| agent de modification : | 3 ; et |
| agent d'accélération de la dégradation : | 5. |

3. Mélange maître de matière plastique biodégradable à base d'amidon selon la revendication 1 ou la revendication 2, dans lequel l'amidon est un amidon de maïs ou un amidon de tapioca.

4. Mélange maître de matière plastique biodégradable à base d'amidon selon la revendication 1 ou la revendication 2, dans lequel la poudre de roche est une poudre de talc ou une poudre de jade.

5. Mélange maître de matière plastique biodégradable à base d'amidon selon la revendication 1 ou la revendication 2, dans lequel l'agent de compatibilisation est sélectionné dans le groupe constitué par une huile végétale, une huile minérale et un agent de couplage d'aluminate, ou un mélange de ceux-ci.

6. Procédé destiné à préparer un mélange maître de matière plastique biodégradable à base d'amidon selon la revendication 1, qui comprend les étapes consistant à :
A. peser chacune des matières premières selon leurs parties en poids ;
B. mélanger l'amidon, le carbonate de calcium léger et la poudre de roche dans un mélangeur pendant une durée comprise entre 20 minutes et 30 minutes à une température comprise entre 165 °C et 180 °C ;
C. ajouter l'agent de modification dans le mélangeur et mélanger pendant une durée comprise entre 2 minutes et 6 minutes à une température comprise entre 140 °C et 155 °C ;
D. ajouter l'agent de compatibilisation dans le mélangeur et mélanger pendant une durée comprise entre 4 minutes et 6 minutes à une température comprise entre 140 °C et 160 °C ;
E. ajouter un matériau de matière plastique, un agent d'accélération de la dégradation et un lubrifiant dans le mélangeur et mélanger pendant une durée comprise entre 10 minutes et 12 minutes à une température comprise entre 160 °C et 175 °C, et refroidir ensuite le mélange obtenu dans un contenant qui contient le matériau de façon à obtenir un matériau de base mélangé ; et
F. réaliser des granulés à partir du matériau de base mélangé dans un appareil granulateur de façon à obtenir le mélange maître de matière plastique dégradable à base d'amidon, dans lequel la température de l'appareil granulateur est comprise entre 120 °C et 170 °C.
